(19) **Europäisches Patentamt / European Patent Office / Office européen des brevets**

(11) **EP 1 417 465 B1**

(12) # FASCICULE DE BREVET EUROPEEN

(45) Date de publication et mention
de la délivrance du brevet:
**18.01.2012   Bulletin 2012/03**

(21) Numéro de dépôt: **02794541.9**

(22) Date de dépôt: **02.08.2002**

(51) Int Cl.:
***G01L 5/16*** *(2006.01)*

(86) Numéro de dépôt international:
**PCT/EP2002/008620**

(87) Numéro de publication internationale:
**WO 2003/014687 (20.02.2003 Gazette 2003/08)**

(54) **METHODE DE DETERMINATION DE CARACTERISTIQUES D'UN PNEUMATIQUE A PARTIR DES CONTRAINTES**

VERFAHREN ZUR BESTIMMUNG DER EIGENSCHAFTEN EINES REIFENS AUS BELASTUNGEN

METHOD FOR DETERMINING CHARACTERISTICS OF A TYRE FROM STRESSES

(84) Etats contractants désignés:
**AT BE BG CH CY CZ DE DK EE ES FI FR GB GR
IE IT LI LU MC NL PT SE SK TR**

(30) Priorité: **06.08.2001   FR 0110565**

(43) Date de publication de la demande:
**12.05.2004   Bulletin 2004/20**

(73) Titulaires:
• **Société de Technologie Michelin
63000 Clermont-Ferrand (FR)**
• **Michelin Recherche et Technique S.A.
1763 Granges-Paccot (CH)**

(72) Inventeur: **BERTRAND, David
F-63400 Chamalières (FR)**

(74) Mandataire: **Bauvir, Jacques et al
Michelin & Cie
Service SGD/LG/PI
C.E.R. Ladoux - F35
63040 Clermont-Ferrand Cedex 09 (FR)**

(56) Documents cités:
**EP-A- 1 026 490**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

La présente invention concerne les véhicules et la mesure des efforts exercés par la chaussée sur les pneumatiques des véhicules.

La présente invention concerne aussi les divers dispositifs d'assistance électronique utilisés par exemple pour la régulation antiblocage des freins d'un véhicule ou la régulation anti-patinage des roues motrices, le contrôle de trajectoire d'un véhicule ou encore pour d'autres formes de contrôle ou de surveillance comme la pression des pneumatiques.

Afin de contrôler le comportement d'un véhicule, on a cherché à déterminer certains paramètres de roulage. Ainsi, pour réduire le glissement longitudinal des roues, on a développé des systèmes de limitation du glissement (A.B.S., A.S.R.) capables de moduler le couple transmis à la roue par le moteur ou le frein en fonction du glissement déduit des variations de vitesse de rotation de chaque roue. On a aussi proposé de mesurer la torsion (déformation angulaire circonférentielle) des flancs d'un pneumatique pour déterminer les variations du couple transmis à la chaussée. Cette mesure, plus directe qu'une déduction à partir de la variation de la vitesse de rotation, peut permettre une régulation plus fine des systèmes de limitation du glissement.

On connaît aussi des systèmes (comme l'E.S.P.) qui agissent sur les freins ou sur la puissance motrice appliquée aux roues pour assurer que la trajectoire souhaitée par le conducteur est bien suivie par le véhicule. Pour ce faire, on mesure généralement simultanément la vitesse de lacet (vitesse de rotation du véhicule autour d'un axe vertical), la vitesse de roulage, l'accélération transversale du véhicule et la position angulaire que le conducteur impose au volant.

LE document EP 1026490 A2 présente une méthode de détermination d'au moins une des caractéristiques choisies parmi les trois composantes d'une résultante d'efforts exercés par la chaussé sur l'aire de contact d'un pneumatique, le couple d'auto-alignement généré par le pneumatique, le carrossage et la pression, dans laquelle on équipe un bourrelet du pneumatique d'au moins un capteur et on déduit la caractéristique des mesures du capteur. Cette méthode utilise un capteur tel que les signaux délivrés par le capteur sont corrélés aux efforts exercés par la chaussée sur l'aire de contact du pneumatique et la caractéristique est obtenue en moyennant les mesures d'au moins deux capteurs similaires.

L'invention part de l'observation que toutes les forces exercées par la chaussée sur le véhicule sont transmises par l'intermédiaire des roues. C'est le bilan de ces forces qui conditionne les accélérations subies par le véhicule. Ainsi, la détermination de l'ensemble de ces forces pourrait permettre de se passer des différents capteurs cités plus haut ou de les compléter pour fournir une information plus complète.

La méthode de l'invention est basée sur la constatation du fait que les efforts agissant entre la bande de roulement du pneumatique et la chaussée provoquent une modification sensible et reproductible des contraintes dans le bourrelet. Ces contraintes, si l'on parvient à les mesurer isolément lors de la rotation du pneumatique en temps réel, peuvent permettre de connaître à chaque instant le sens et l'intensité des efforts agissant sur le pneumatique ainsi que le signe et l'intensité du couple d'auto-alignement exercé par le pneumatique.

Du fait même de sa conception et de son mode de fonctionnement, les déformations et les contraintes internes générées dans le pneu lorsqu'il est sollicité dépendent de sa pression de gonflage. Ainsi, la pression de gonflage est un des paramètres de la méthode proposée ici. Cette pression peut être connue par un moyen de mesure spécifique et indépendant des mesures faites dans le contexte de cette invention, un exemple d'un tel moyen étant un capteur de pression. Cette pression peut aussi découler d'un traitement spécifique de la mesure des contraintes.

Dans des conditions réelles d'utilisation, le pneu est fréquemment soumis à des variations de l'angle de carrossage. Il en résulte une modification des déformations du pneu et de la répartition des contraintes dans le bourrelet. Ainsi, le carrossage est un des paramètres de la méthode proposée ici. Le carrossage peut être connu par un moyen de mesure spécifique et indépendant des mesures faites dans le contexte de cette invention, un exemple d'un tel moyen étant un capteur d'angle de carrossage. Ce carrossage peut aussi découler d'un traitement spécifique de la mesure des contraintes dans les bourrelets.

L'invention propose une méthode de détermination d'au moins une des caractéristiques choisies parmi les trois composantes d'une résultante d'efforts exercés par la chaussée sur l'aire de contact d'un pneumatique et le couple d'auto-alignement généré par le pneu et le carrossage et la pression, ladite caractéristique est déduite d'au moins une mesure des contraintes en au moins trois points fixes dans l'espace, situés dans un des bourrelets. Les coordonnées en azimuts de cet espace ont leur origine définie par rapport au centre de l'aire de contact du pneu et de la chaussée. De préférence, lesdits au moins trois points fixes dans l'espace sont tels que :

- un des points corresponde à l'azimut du centre de l'aire de contact ou l'azimut du point opposé à l'aire de contact ;

- les deux autres points soient symétriques par rapport à un plan vertical passant par le centre de l'aire de contact.

La suite de la description présente le cas où l'on mesure des contraintes de cisaillement. Cependant, cette approche ne doit pas être considérée comme limitative, d'autres mesures de contraintes comme par exemple des contraintes de flexion ou de compression observées aux mêmes endroits pouvant aussi permettre de déterminer les mêmes caractéristiques.

Dans une mise en oeuvre préférée, l'invention propose d'estimer la contrainte de cisaillement dans le bourrelet dans la direction circonférentielle. La mesure des contraintes de cisaillement peut par exemple être réalisée dans la zone d'ancrage de la carcasse dans le bourrelet, de préférence dans un composant de caoutchouc dont le module de Young est assez élevé, de préférence supérieur à 5 Mpa à 10% d'allongement. Par exemple, on implante un capteur dans le constituant en caoutchouc superposé à la tringle, comme montré aux dessins, ceci n'étant qu'un cas particulier parmi de nombreuses configurations possibles, selon la conception des pneumatiques.

La suite de la description explique plus en détails l'invention à l'aide des figures jointes dans lesquelles :

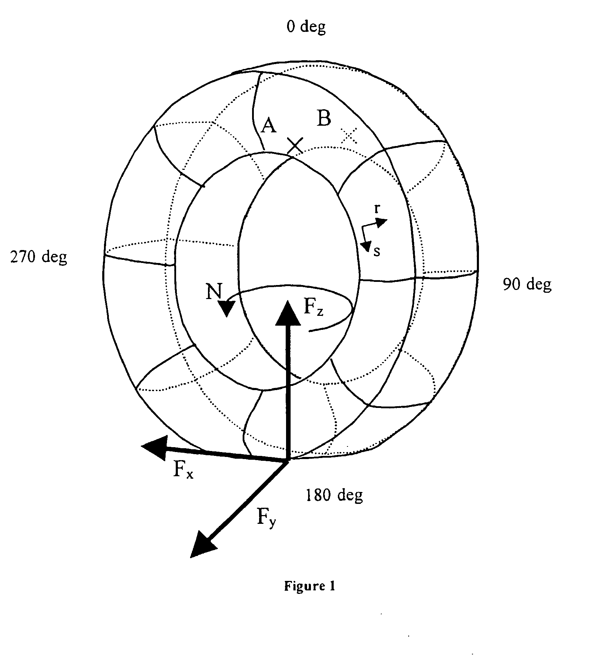

- la figure 1 est une perspective d'un pneu sur lequel on définit des conventions utiles à l'intelligence de l'invention ; La contrainte de cisaillement circonférentielle correspond au cisaillement entre la direction radiale (notée r sur la figure) et la direction circonférentielle (notée s sur la figure). Cette contrainte de cisaillement sera notée $\sigma_{rs}$

- les figures 2a et 2b montrent l'effet de la composante verticale Fz sur la contrainte $\sigma_{rs}$:

    - où la courbe pleine correspond à une charge verticale de 400 daN,
    - où la courbe en pointillés correspond à une charge verticale de 500 daN,
    - où la courbe en trait mixte correspond à une charge verticale de 300 daN ;

- les figures 3a et 3b montrent l'effet de la composante Fx sur la contrainte $\sigma_{rs}$:

    - où la courbe pleine correspond à une charge verticale de 400 daN et une absence de force Fx,

    - où la courbe en pointillés correspond à une charge verticale de 400 daN et une force Fx de -400 daN (Freineur),

    - où la courbe en trait mixte correspond à une charge verticale de 400 daN et une force Fx de 400 daN (Moteur) ;

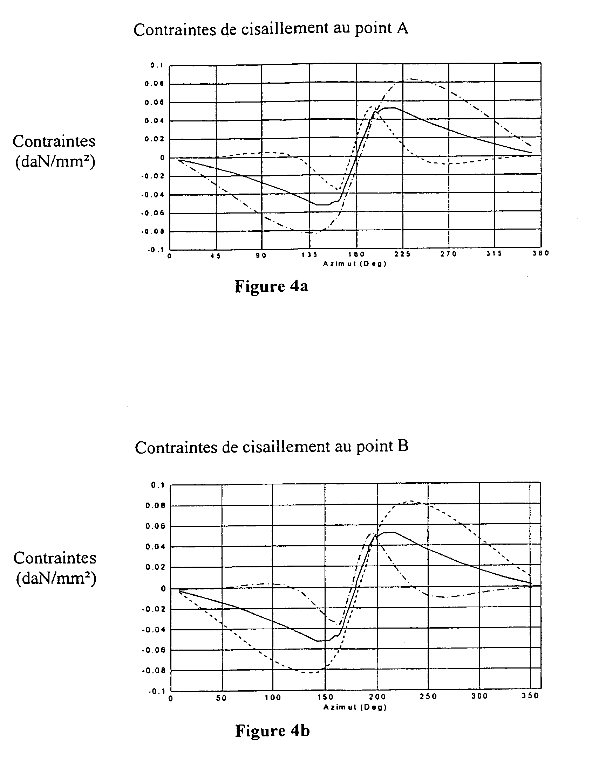

- les figures 4a et 4b montrent l'effet de la composante Fy sur la contrainte $\sigma_{rs}$:

    - où la courbe pleine correspond à une charge verticale de 400 daN sans effort Fy,
    - où la courbe en pointillés correspond à une charge verticale de 400 daN avec un effort Fy de 280 daN,

    - où la courbe en traits mixtes correspond à une charge verticale de 400 daN avec un effort Fy de -280 daN ;

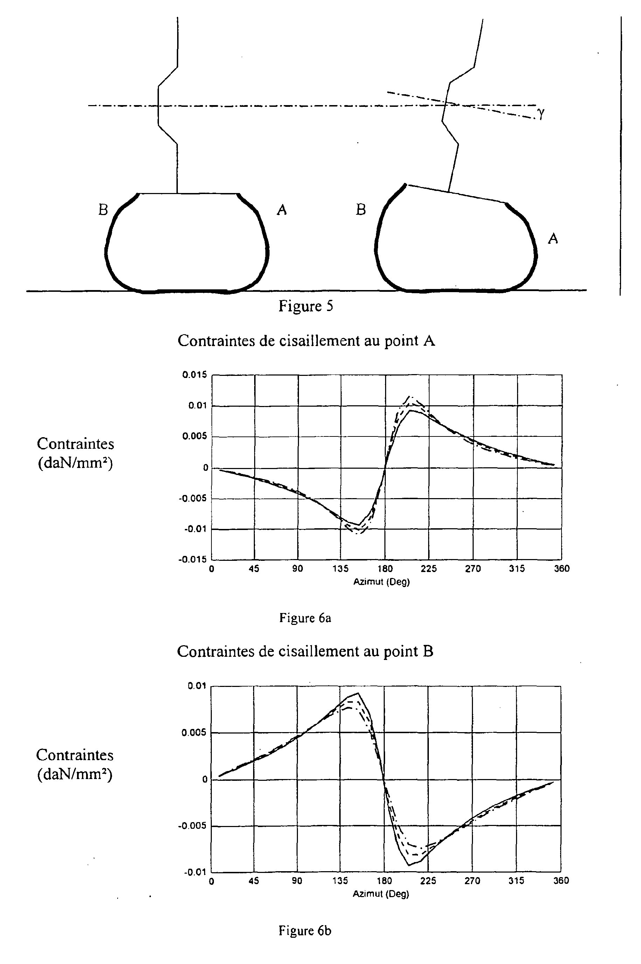

- la figure 5 montre la déformation du pneumatique lorsqu'un angle de carrossage est appliqué ;
- les figures 6a et 6b montrent l'effet du carrossage sur les signaux de contraintes de cisaillement :

    - où la courbe pleine correspond à une charge verticale de 400 daN sans effort Fx et Fy et à angle de carrossage nul,
    - où la courbe en pointillés correspond à une charge verticale de 400 daN avec un angle de carrossage de 2°,
    - où la courbe en traits mixtes correspond à une charge verticale de 400 daN avec un angle de carrossage de 4° ;

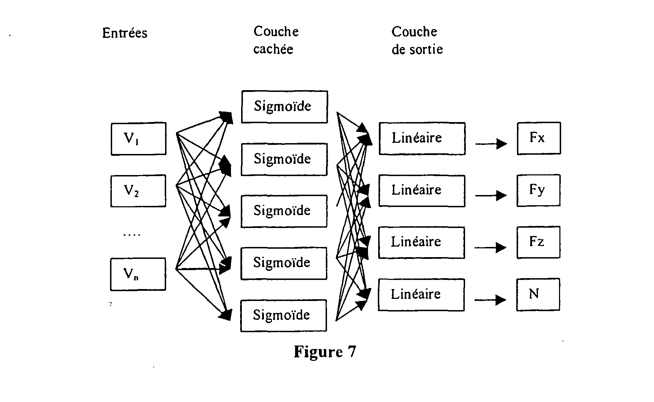

- la figure 7 montre l'architecture de réseau de neurones ;

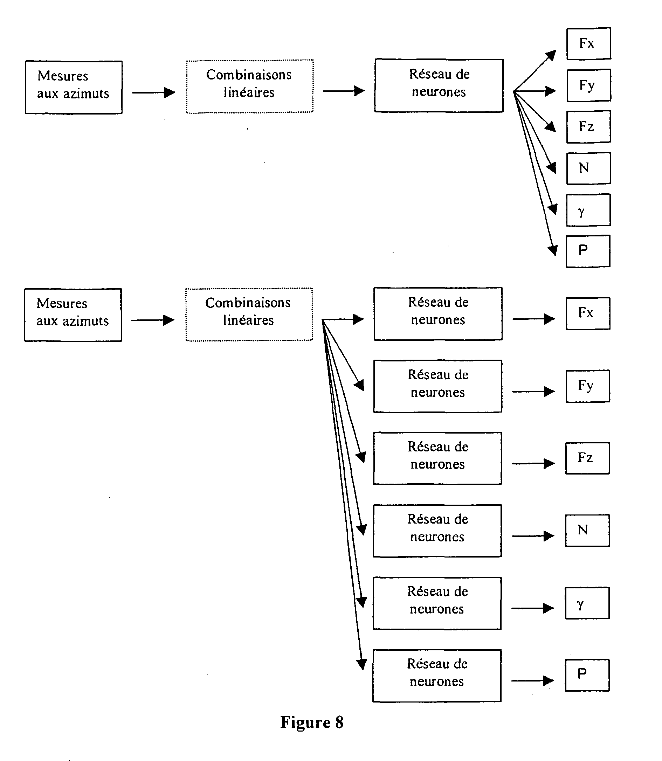

- la figure 8 montre des exemples de fonction de transfert;

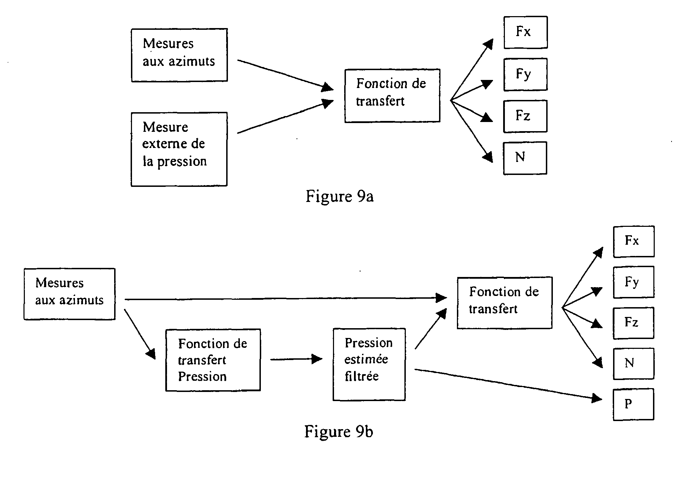

- les figures 9a et 9b montrent deux exemples d'architecture permettant de prendre en compte la pression de gonflage du pneumatique si celle-ci varie ;

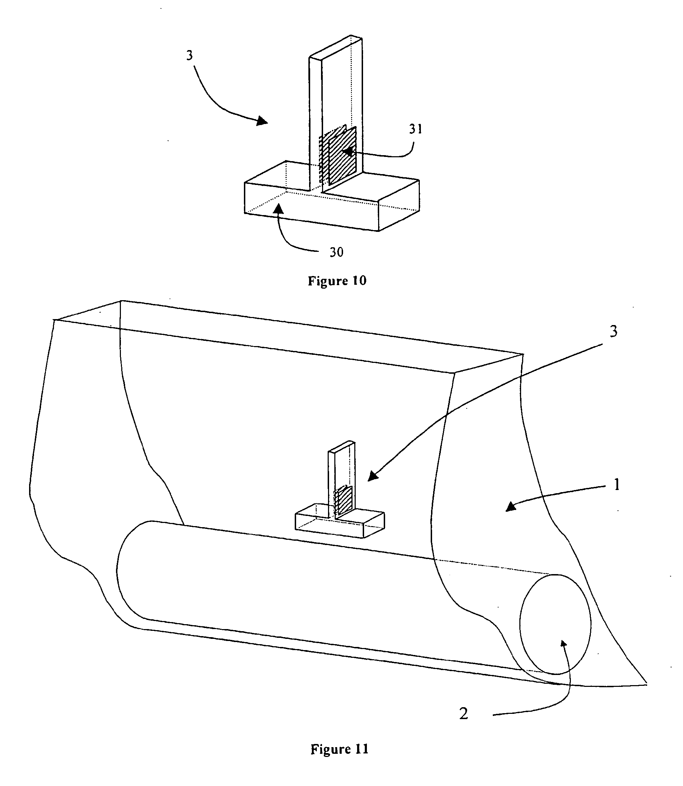

- la figure 10 montre un exemple de capteur de contrainte de cisaillement constitué d'un corps d'épreuve en forme de « Té » inversé équipé de deux jauges de contraintes ;

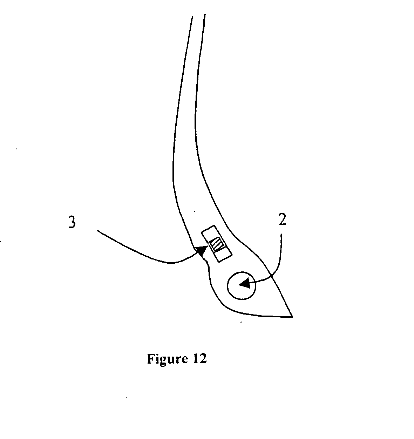

- les figures 11 et 12 montrent un exemple d'implantation du capteur présenté à la figure 7 dans la région du bourrelet du pneu ;

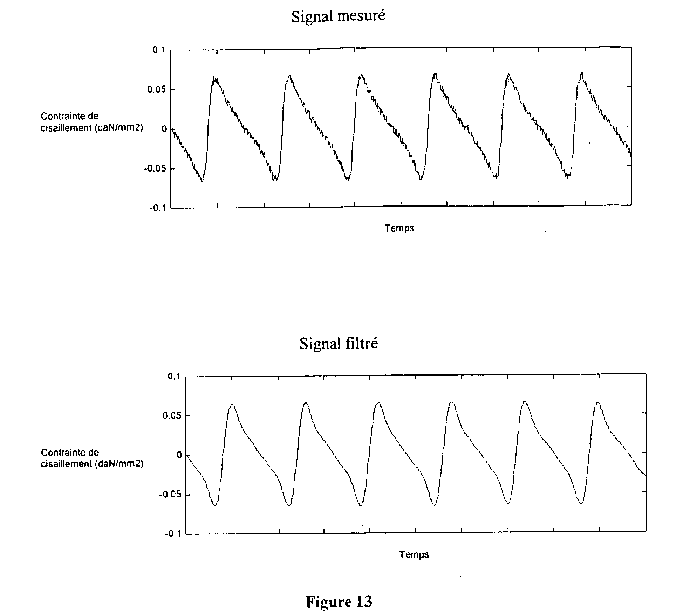

- la figure 13 montre le signal temporel brut et filtré ;

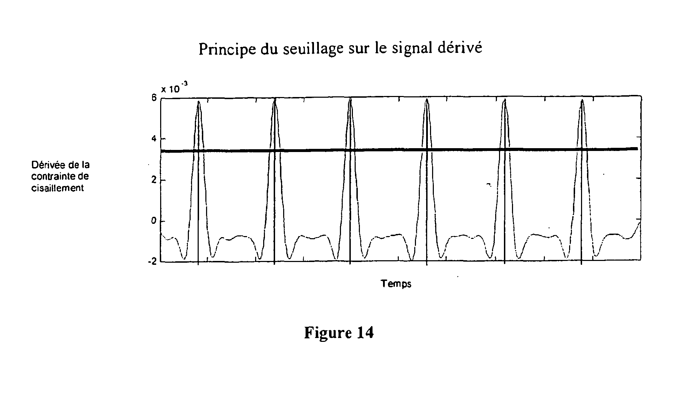

- la figure 14 montre l'identification du passage dans l'aire de contact à partir du signal temporel ;

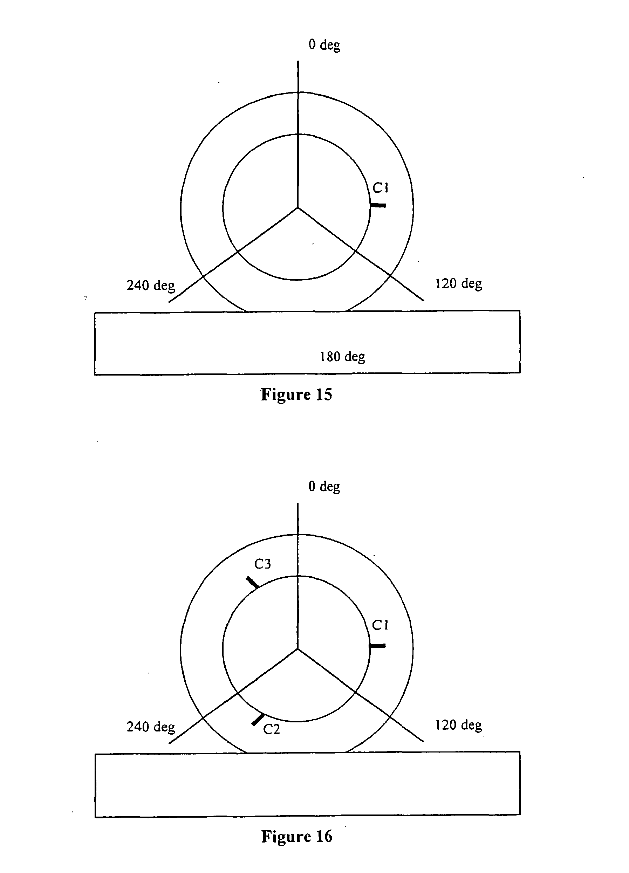

- la figure 15 montre un exemple de fonctionnement avec un capteur et un modèle ;
- la figure 16 montre un exemple de fonctionnement avec trois capteurs et un modèle ;

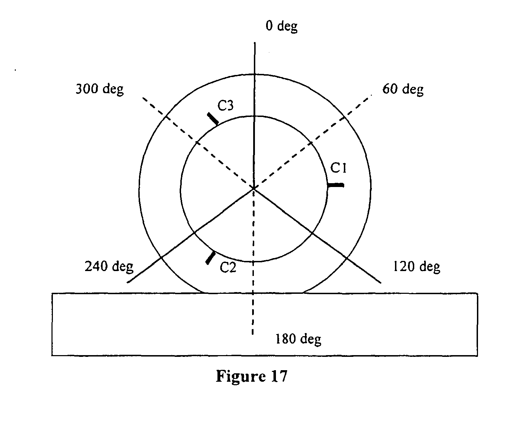

- la figure 17 montre un exemple de fonctionnement avec trois capteurs et deux modèles :

    - où les positions indiquées en traits pleins représentent les azimuts auxquels les mesures doivent être prises pour servir d'entrée au modèle 1,

    - où les positions indiquées en traits pointillés représentent les azimuts auxquels les mesures doivent être prises pour servir d'entrée au modèle 2,

    - où C1, C2 et C3 représentent les positions azimutales des capteurs sur le bourrelet d'un pneumatique.

La méthode décrite ici s'appuie sur le fait que chaque force appliquée au pneu dans l'aire de contact provoque une modification de la contrainte de cisaillement dans le bourrelet. Considérons le cas d'un pneumatique monté sur sa roue et gonflé sur le premier bourrelet duquel on repère au niveau du bourrelet un point A. Sur le second bourrelet, au même azimut que A et sur le même rayon, on choisit un point B. En l'absence de forces appliquées sur le pneumatique, la contrainte de cisaillement est constante en fonction de l'angle de rotation de l'ensemble monté et correspond à la contrainte résiduelle du gonflage.

Lorsque le pneumatique est soumis à des forces, on observe les effets suivants pour chacune des composantes desdites forces :

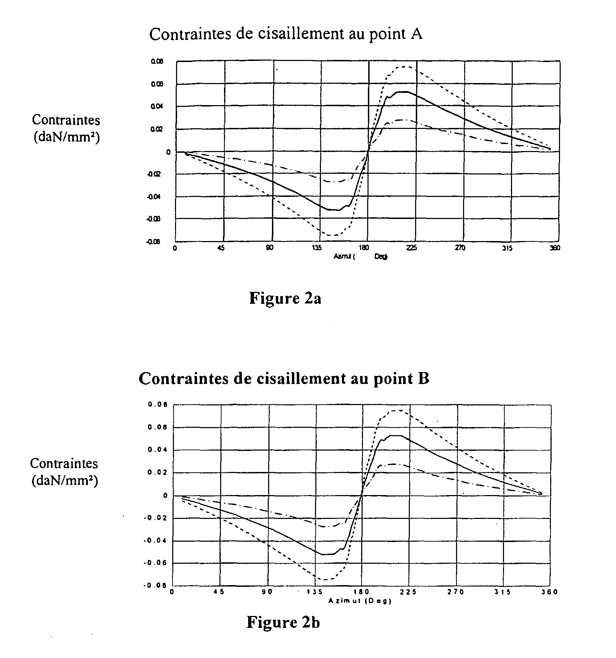

• La composante verticale (dénommée Fz ici) plaque le pneumatique sur le sol. En créant une aire de contact, elle entraîne une variation de la contrainte de cisaillement au point A lorsque l'ensemble monté est en rotation. Les figures 2a et 2b indiquent la contrainte de cisaillement, respectivement au point A et au point B, en fonction de l'azimut auquel ils se trouvent. La ceinture du pneumatique est reliée au bourrelet par l'intermédiaire des flancs. L'augmentation de la composante verticale appliquée entraîne un déplacement vertical de la roue par rapport à la ceinture du pneumatique. Les flancs cisaillent alors le bourrelet dans un sens opposé en entrée et en sortie de l'aire de contact. Il est aussi intéressant de constater que la contrainte de cisaillement reste nulle à l'azimut du centre de l'aire de contact ainsi qu'au point opposé au centre de l'aire de contact.

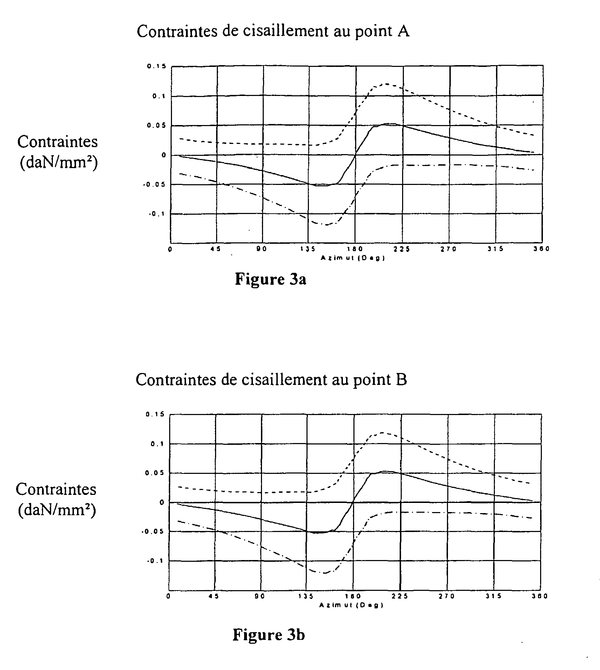

• La composante horizontale dans la direction de roulage (dénommée Fx ici) est créée par un couple moteur ou freineur appliqué à la roue. Ceci se traduit par une rotation de la roue par rapport à la ceinture du pneumatique. Les flancs sont entraînés par la ceinture et cisaillent le bourrelet sur l'ensemble des azimuts. Les figures 3a et 3b illustrent les effets de la composante Fx des forces appliquées, en indiquant la contrainte de cisaillement aux points A et B, en fonction de l'azimut auquel ils se trouvent. Lorsqu'une force Fx positive est appliquée (couple moteur), la contrainte de cisaillement telle qu'elle est définie diminue sur l'ensemble des azimuts sur les deux bourrelets. Lorsqu'une force Fx négative est appliquée (couple freineur), la contrainte de cisaillement augmente sur l'ensemble des azimuts sur les deux bourrelets.

• La composante horizontale dans la direction transverse (dénommée Fy ici) provoque principalement une différenciation des deux bourrelets. Les figures 4a et 4b illustrent les effets de ce type de sollicitation, en indiquant la contrainte de cisaillement aux points A et B, en fonction de l'azimut auquel ils se trouvent. Dans le cas d'une sollicitation avec Fy positif, l'un des bourrelets montre une augmentation de la contrainte de cisaillement du côté de l'entrée de l'aire de contact et une diminution du côté de la sortie. L'autre bourrelet montre une diminution de la contrainte de cisaillement du côté entrée d'aire de contact et une augmentation du côté sortie. Contrairement à l'application d'une charge, on observe pour l'application d'une force Fy une variation de la contrainte de cisaillement aux points d'azimut 180° et 0° dans des sens opposés sur les deux bourrelets.

Le couple d'auto-alignement N (moment autour de l'axe vertical) n'est pas à proprement parler un effort qui est imposé. Il s'agit plutôt d'une conséquence de la façon dont les composantes Fx, Fy et Fz sont appliquées dans l'aire de contact. Si le point d'application de la résultante ayant pour composantes Fx, Fy et Fz n'est pas le centre de l'aire de contact, cette résultante génère un moment autour de Oz que nous appelons couple d'auto-alignement. La présence de ce moment se traduit principalement par une rotation de l'aire de contact autour de Oz. Cet effet a pour conséquence par exemple une augmentation de la contrainte de cisaillement dans un bourrelet à l'azimut du centre de l'aire de contact et une diminution de la contrainte de cisaillement dans l'autre bourrelet au même azimut par rapport à une situation à couple d'auto-alignement nul.

Dans le cas où un angle de carrossage est appliqué au pneumatique, les comportements des deux bourrelets se distinguent. De manière simplifiée, tout se passe comme si un bourrelet porte plus de charge que l'autre. La figure 5 illustre ce fonctionnement en comparant une section de la partie du pneu dans l'aire de contact sans carrossage et avec un carrossage γ. Il en résulte aussi un léger déplacement latéral de l'aire de contact qui se traduit par une poussée dans la direction Y. Les figures 6a et 6b montrent l'évolution des contraintes de cisaillement dans les deux bourrelets. Sur le bourrelet surchargé (Point A), l'évolution est semblable à celle d'une augmentation de charge. Sur l'autre bourrelet (Point B), on constate une évolution compatible avec une diminution de la charge portée. Vu que l'évolution des signaux est impaire en bourrelets et impaire en azimut, tout comme l'effet de Fy, il est possible de distinguer simplement un effet du carrossage d'un effet de type Fx, Fz ou N. Les figures 4 et 6 (a et b) montrent en outre que les effets de Fy et de l'angle de carrossage diffèrent. On peut donc établir un lien sans ambiguïté entre les signaux de contraintes et le carrossage. Il est alors possible d'estimer la valeur de l'angle de carrossage sous lequel le pneu travaille à l'aide des mesures de contraintes dans le bourrelet.

La rigidité apparente d'un pneumatique provient à la fois de son fonctionnement pneumatique (de sa pression de gonflage) et de sa rigidité structurelle (rigidité de son architecture). Les signaux de contrainte mesurés contiennent eux aussi une composante pneumatique et une composante structurelle. Par exemple, les signaux de contrainte d'un pneu gonflé à 2 bars et chargé à 400 daN suivant Z ne sont pas identiques à ceux délivrés par le même pneu à 2.5 bars et chargé à 500 daN. Cette différence correspond à la contribution structurelle et peut permettre d'estimer la pression de gonflage du pneumatique.

Dans le cas où la pression de gonflage varie, les liens qui relient les efforts appliqués et les signaux de contraintes sont quantitativement modifiés, mais sans que leur nature ne soit changée. Les contraintes dans les bourrelets sont influencés par la pression et par la charge ; ils sont composés d'une contribution due au fonctionnement « pneumatique » (c'est à dire dépendant de la pression de gonflage) et une autre contribution due au fonctionnement structurel (c'est à dire des matériaux constitutifs du pneu et de leur arrangement), lequel ne change pas quand on change la pression, d'où on peut remonter à la pression.

Ainsi, la méthode peut être expliquée d'abord dans le cas d'une pression de gonflage supposée constante dans un but de simplicité. De même, nous considérons dans la suite que le carrossage est constant et nul pour rendre l'explication plus claire et ne mentionnons que les cas les plus intéressants vis à vis de ce paramètre.

Avant de poursuivre par la description détaillée de plusieurs exemples où l'on procède toujours à la mesure des contraintes en au moins deux points fixes dans l'espace, remarquons qu'il existe au moins un cas où une mesure de contrainte dans un seul bourrelet permet d'estimer l'une des composantes d'une résultante d'efforts. En effet, comme on peut le voir sur les figures 2a, 2b, 3a, 3b, 4a et 4b, les composantes Fy ou Fz appliquées dans l'aire de contact n'ont aucun effet sur la contrainte de cisaillement mesurée à l'azimut opposé à l'aire de contact (azimut 0°). La mesure de la contrainte de cisaillement en ce point permet donc à elle seule une estimation de la composante Fx des efforts appliqués dans l'aire de contact.

Lorsque qu'une sollicitation qui mêle des composantes Fx, Fy et Fz est appliquée, on observe une superposition des effets énoncés précédemment sur la contrainte de cisaillement circonférentielle. Un des avantages de la méthode proposée est de permettre une séparation des contributions de chaque composante de la sollicitation appliquée, de manière à permettre une estimation de chacune de ces composantes.

L'approche utilisée s'appuie en partie sur des caractéristiques de parité remarquables qui correspondent aux symétries naturelles du pneu pour réaliser cette séparation.

Définissons l'azimut $\theta$ comme l'angle auquel on analyse la contrainte de cisaillement circonférentielle des bourrelets. L'origine de l'azimut est prise à l'opposé du centre de l'aire de contact. Le centre de l'aire de contact a donc l'azimut 180°.

Le signal de contrainte en fonction de l'azimut $s(\theta)$ peut alors se décomposer en deux signaux $s_p(\theta)$ et $s_i(\theta)$ tels que :

$$s(\theta) = s_p(\theta) + s_i(\theta)$$

$$s_i(180 + \theta) = -s_i(180 - \theta)$$

$$s_p(180 + \theta) = s_p(180 - \theta)$$

$s_i$ est appelé partie impaire et $s_p$ partie paire de s.

De même, soient $s^1(\theta)$ et $s^2(\theta)$ les signaux associés à la mesure de la contrainte de cisaillement circonférentielle sur chacun des côtés du pneu. On définit :

$$s^p(\theta) = \frac{s^1(\theta) + s^2(\theta)}{2}$$

$$s^i(\theta) = \frac{s^1(\theta) - s^2(\theta)}{2}$$

$s^p$ est appelée partie paire en bourrelet et $s^i$ partie impaire en bourrelet.

Notons que cette décomposition en parité suivant les bourrelets peut aussi bien s'appliquer à $s_i$ et $s_p$. On obtient alors à partir d'une mesure réalisée sur chaque bourrelet quatre signaux $S_i^i$ $S_i^p$ $s_p^i$ $s_p^p$.

Les efforts Fx, Fy, Fz et le couple d'auto-alignement N sont de par leurs orientations liés à certaines symétries. En particulier, on peut utiliser ce principe pour découpler les effets des composantes efforts sur le pneu.

Ainsi, d'après les observations (figures 2a, 2b, 3a, 3b, 4a et 4b) le signal :

- $S_p^p$ est majoritairement lié à la force Fx.
- $S_i^i$ est majoritairement lié à la force Fy
- $S_i^p$ est majoritairement lié à la force Fz

Les symétries qui s'appliquent permettent de plus d'affirmer que le signal $s_p^i$ est principalement lié au couple d'auto-alignement N.

Fort de ces observations, la méthode explicitée ici propose de réaliser des mesures de la contrainte de cisaillement circonférentielle dans le bourrelet sur au moins un côté du pneumatique. Ces mesures permettent grâce à des opérations mathématiques (combinaisons linéaires ou non entre les mesures réalisées aux différents azimuts) d'estimer les valeurs des signaux $S_i{}^p$ $S_p{}^i$ $S_p{}^p$ et $S_i{}^i$ en certains azimuts et par là même de fournir une évaluation des composantes de la force appliquée.

Dans le but d'éclairer la démarche, on présente ici quelques exemples d'utilisation de la méthode qui ne sont pas exhaustifs et ne limitent en rien les configurations utilisables à celles listées ici.

Considérons le cas où les mesures sont réalisées sur un bourrelet uniquement.

Exemple 1 :

On souhaite estimer les composantes des efforts appliqués dans l'aire de contact et le couple d'auto-alignement à partir de mesures de la contrainte de cisaillement circonférentielle dans un bourrelet du pneumatique mesurée en trois azimuts. Les azimuts de mesure sont choisis de la manière suivante :

- Un des azimuts correspond au milieu de l'aire de contact ou l'azimut du point opposé à l'aire de contact (azimut 180°). Soit $V_c$ la valeur mesurée à ce point.

- Les deux autres azimuts sont symétriques par rapport à l'azimut du centre de l'aire de contact. (180°+$\alpha$° et 180°-$\alpha$°). Soient $V_1$ et $V_2$ les valeurs mesurées en ces points.

D'après les observations précédentes :

- $V_2$-$V_1$ permet d'estimer le déséquilibre entre l'entrée d'aire de contact et la sortie. Cette valeur sera principalement liée à la composante Fz. Une estimation de Fz est donnée par $f_z(r_2V_2-r_1V_1)$ où $r_1$ et $r_2$ sont des coefficients réels positifs et $f_z$ une fonction continue monotone.

- $V_c$-$(V_1+V_2)$ permet d'estimer la différence entre le passage dans l'aire de contact et l'extérieur de l'aire de contact. Le résultat est ici principalement lié à Fy. Une estimation de Fy est donnée par $f_y$ $(s_cV_c-(s_1V_{1+s_2}V_2))$ où $s_1$, $s_2$ et $s_c$ sont des coefficients réels positifs et $f_y$ une fonction continue monotone.

- $V_c$+$V_1$+$V_2$ donne une indication sur le cisaillement global du bourrelet. Cette valeur sera principalement liée à la composante Fx de la force appliquée. Une estimation de Fx est donnée par $f_x(u_cV_c+u_1)$ $V_1+u_2V_2)$ où $u_1$, $u_2$ et $u_c$ sont des coefficients réels positifs et $f_x$ une fonction continue monotone.

Dans cet exemple, on estime quatre composantes (Fx, Fy, Fz et N) à partir de trois mesures de la contrainte de cisaillement circonférentielle. En effet, il existe des cas où le couple d'auto-alignement est directement et uniquement dépendant des composantes Fx, Fy et Fz. On peut alors l'estimer aussi. Dans le cas où le couple d'auto-alignement dépend d'autres paramètres, il est nécessaire de mesurer la contrainte de cisaillement circonférentielle dans le bourrelet en un nombre plus important d'azimuts pour estimer correctement les quatre composantes d'efforts citées.

Exemple 2 :

On souhaite estimer les composantes des efforts appliqués dans l'aire de contact et le couple d'auto-alignement à partir de mesures de la contrainte de cisaillement circonférentielle dans le bourrelet sur un côté du pneumatique mesurée en cinq azimuts. Les azimuts de mesure sont choisis de la manière suivante :

- Un des azimuts correspond au milieu de l'aire de contact (azimut 180°) ou a l'opposé de l'aire de contact (azimut 0°). Soit $V_c$ la valeur mesurée à ce point.

- Deux autres azimuts sont symétriques par rapport à l'azimut du centre de l'aire de contact. (180°+$\alpha$° et 180°-$\alpha$°). Soient $V_1$ et $V_2$ les valeurs mesurées en ces points.

- Les deux derniers azimuts sont symétriques par rapport à l'azimut du centre de l'aire de contact. (180°+$\beta$° et 180°-$\beta$°). Soient $V_3$ et $V_4$ les valeurs mesurées en ces points.

Des combinaisons de même nature mais un peu plus complexes que celles exposées dans l'exemple 1 permettent dans ce cas de déterminer les composantes Fx, Fy, Fz et N y compris dans les cas où le couple d'auto-alignement n'est pas uniquement dépendant des composantes Fx, Fy et Fz.

Considérons maintenant le cas où les mesures sont réalisées sur les deux bourrelets.

Exemple 3 :

On souhaite estimer les composantes des efforts appliqués dans l'aire de contact et le couple d'auto-alignement à partir de mesures de la contrainte de cisaillement circonférentielle des deux bourrelets du pneumatique mesurée en deux azimuts sur chaque bourrelet. Les azimuts de mesure sont choisis de façon symétrique par rapport à l'azimut du centre de l'aire de contact (180°+$\alpha$ et 180°-$\alpha$°). $\alpha$ doit être différent de 0° et 180° pour pouvoir estimer Fx. Soient $V_1{}^1$ et $V_2{}^1$ les valeurs mesurées à ces azimuts sur le premier bourrelet, et $V_1{}^2$ et $V_2{}^2$ les valeurs mesurées à ces azimuts sur le second bourrelet.

Grâce à ces quatre valeurs, il est possible de déterminer les composantes en utilisant la décomposition suivant les parités en azimut et en bourrelet :

- $V_1{}^1$+$V_1{}^2$+$V_2{}^1$+$V_2{}^2$ donne la composante paire en azimut et en bourrelet. Cette combinaison est donc directement liée à Fx. Une estimation de Fx est donnée par $f_x(a_1V_1^1 + a_2V_2^1 + b_1V_1^2 + b_2V_2^2)$ où $a_1$, $a_2$, $b_1$ et $b_2$ sont des coefficients réels positifs et $f_x$ une fonction continue monotone.

- $V_1^1 + V_1^2 - (V_2^1 + V_2^2)$ donne la composante impaire en azimut et paire en bourrelet.
  Cette combinaison est donc directement liée à Fz. Une estimation de Fz est donnée pardes coefficients réels $f_z(c_1V_1^1 - c_2V_2^1 + d_1V_1^2 - d_2V_2^2)$ où $c_1$, $c_2$, $d_1$ et $d_2$ sont des coefficients réels positifs et $f_z$ une fonction continue monotone.

- $V_1^1 - V_1^2 + (V_2^1 - V_2^2)$ donne la composante paire en azimut et impaire en bourrelet.
  Cette combinaison est donc directement liée à N. Une estimation de N est donnée par $f_n$ $(e_1V_1^1 + e_2V_2^1 - f_1V_1^2 - f_2V_2^2)$ où $e_1$, $e_2$, $f_1$ et $f_2$ sont des coefficients réels positifs et $f_n$ une fonction continue monotone.

- $V_1^1 - v_1^2 - (V_2^1 - V_2^2)$ donne la composante impaire en azimut et impaire en bourrelet.
  Cette combinaison est donc directement liée à Fy. Une estimation de Fy est donnée par des coefficients réels $f_y(g_1V_1^1 - g_2V_2^1 - h_1V_1^2 + h_2V_2^2)$ où $g_1$, $g_2$, $h_1$ et $h_2$ sont des coefficients réels positifs et $f_y$ une fonction continue monotone.

Par ce type de disposition, on utilise au maximum les symétries du pneumatique et on peut espérer une très bonne précision de la reconstruction des composantes de la sollicitation appliquée dans l'aire de contact.

Exemple 4 :

On souhaite estimer les composantes des efforts appliqués dans l'aire de contact et le couple d'auto-alignement à partir de mesures de la contrainte de cisaillement circonférentielle dans le bourrelet des deux côtés du pneumatique mesurée en trois azimuts sur chaque bourrelet. Les azimuts de mesure sont choisis de la manière suivante :

- Deux azimuts choisis de façon symétrique par rapport à l'azimut du centre de l'aire de contact ($180° + \alpha$ et $180° - \alpha°$). Soient $V_1^1$ et $V_2^1$ les valeurs mesurées à ces azimuts sur le premier bourrelet, et $V_1^2$ et $V_2^2$ les valeurs mesurées à ces azimuts sur le second bourrelet.

- Un azimut correspondant au centre de l'aire de contact. Soient $V_c^1$ et $V_c^2$ les valeurs mesurées à ces azimuts. L'azimut qui correspond à l'opposé de l'aire de contact est utilisable de manière équivalente.

Le traitement est similaire à celui de l'exemple 3. Les valeurs $V_c^1$ et $V_c^2$ permettent une certaine redondance de l'information mais surtout une meilleure estimation de la composante Fx.
On obtient l'information sur Fx grâce à $V_c^1$ et $V_c^2$ et l'information sur Fz, Fy et N par $V_1^1$, $V_1^2$, $V_2^1$ et $V_2^2$. On utilise ainsi une possibilité supplémentaire de découplage des différentes contributions.

Exemple 5 :

On souhaite estimer les composantes des efforts appliqués dans l'aire de contact et le couple d'auto-alignement à partir de mesures de la contrainte de cisaillement circonférentielle dans le bourrelet des deux côtés du pneumatique mesurée en quatre azimuts sur chaque bourrelet. Les azimuts de mesure sont choisis de la manière suivante :

- Deux azimuts choisis de façon symétrique par rapport à l'azimut du centre de l'aire de contact ($180° + \alpha$ et $180° - \alpha°$). Soient $V_1^1$ et $V_2^1$ les valeurs mesurées à ces azimuts sur le premier bourrelet, et $V_1^2$ et $V_2^2$ les valeurs mesurées à ces azimuts sur le second bourrelet.

- Un azimut choisi par rapport à l'azimut du centre de l'aire de contact ($180° + \beta$). $\beta$ est différent de $\alpha$. Soient $V_3^1$ la valeur mesurée à cet azimut sur le premier bourrelet, et $V_3^2$ la valeur mesurée à cet azimut sur le second bourrelet.

- Un azimut correspondant au centre de l'aire de contact. Soient $V_c^1$ et $V_c^2$ les valeurs mesurées à ces azimuts. L'azimut qui correspond à l'opposé de l'aire de contact est utilisable de manière équivalente.

Dans ce cas, un traitement similaire aux cas 3 et 4 est applicable, avec plus de robustesse compte tenu de la redondance de l'information. Toutefois, les mesures de contraintes proposées ici permettent en plus d'estimer les composantes d'efforts et le couple N de fournir une estimation de l'angle de carrossage dans le cas où celui-ci est susceptible de varier. En effet, la difficulté réside dans ce cas à déterminer la part des deux contributions impaires en azimut et impaires en bourrelet que sont la composante Fy et l'angle de carrossage.
Le fait de disposer de mesures à deux angles différents par rapport au centre de l'aire de contact permet d'évaluer la pente des signaux en fonction de l'azimut et de reconnaître un effet Fy d'un effet carrossage. Réaliser les mesures de contraintes de cisaillement dans les deux bourrelets permet de rendre les estimations beaucoup plus robustes à la variation du carrossage et permet aussi l'estimation de l'angle de carrossage.
Les combinaisons linéaires prises en exemple ci-dessus sont très rudimentaires et permettent uniquement de prendre en compte les effets principaux. Dans le but d'affiner les estimations des composantes des efforts et de prendre en compte le fonctionnement non linéaire du pneu, la méthode décrite fait appel à des fonctions de transfert plus évoluées pour relier les mesures aux estimations des efforts. Toute fonction d'interpolation permettant d'établir un lien entre les grandeurs mesurées et les valeurs de la ou des caractéristiques choisies peut être utilisée dans ce cadre. On peut ainsi déterminer les coefficients de la fonction d'interpolation à partir d'une base d'apprentissage (voir ci-dessous).

Bien que tous les exemples listés ici utilisent des azimuts de mesure choisis pour tirer parti au mieux des symétries du pneu et faciliter la reconstruction, le choix de la position des azimuts auxquels les valeurs sont mesurées est libre (la symétrie des azimuts n'est pas en soi obligatoire) car toute combinaison d'un nombre suffisant de mesures permet une estimation des composantes de la sollicitation appliquée. Il est possible, dans ce cas de rechercher directement les fonctions donnant les composantes Fx, Fy, Fz et N en fonction des mesures de la contrainte de cisaillement circonférentielle dans le bourrelet d'un côté ou des deux côtés, en des azimuts connus. La détermination des fonctions de transfert n'est plus nécessairement basée sur l'analyse de la mécanique du pneumatique mais sur la réponse du pneumatique, en terme de contrainte de cisaillement circonférentielle dans le bourrelet d'un côté ou des deux côtés, aux efforts qu'il subit.

Que les azimuts de mesure soient choisis grâce à une analyse physique ou décidés de manière plus arbitraire, les réseaux de neurones semblent bien adaptés pour établir une fonction de transfert entre les mesures réalisées et les composantes des efforts Fx, Fy , Fz et N. Le cas échéant, l'angle de carrossage peut aussi faire partie des grandeurs à estimer et apparaître en sortie de la fonction de transfert. Parmi les schémas les plus simples applicables, on peut retenir comme fonction d'interpolation permettant d'établir un lien entre les grandeurs mesurées et les valeurs des composantes de la sollicitation appliquée l'utilisation de réseaux à une couche de neurones cachés et une couche de neurones de sortie. Ces neurones cachés utilisent une fonction de transfert sigmoïde. Les neurones de sortie utilisent quant à eux une fonction de transfert linéaire (figure 7). La propriété de parcimonie de ce type de réseau employé comme approximateur est ici très intéressante. Il est possible d'utiliser un réseau par composante à estimer ou un réseau permettant grâce à plusieurs sorties d'estimer toutes les composantes.

Si les azimuts de mesure ont été choisis de manière à tirer parti des symétries ou de remarques physiques, il peut être intéressant de réaliser des combinaisons linéaires entre les grandeurs avant l'entrée dans le réseau. Dans ce cas, une analyse en composantes principales permettra de déterminer de façon judicieuse les coefficients de ces combinaisons et simplifiera le réseau de neurones nécessaire. On obtient l'architecture décrite sur la figure 8, qui montre des exemples de fonction de transfert où les combinaisons linéaires en entrée sont facultatives. Il est possible d'utiliser un réseau à plusieurs sorties ou plusieurs réseaux à une sortie ou toute autre combinaison. Les grandeurs de sortie possibles (Fx, Fy, Fz, N, P et γ) sont indiquées mais elles sont bien entendu facultatives.

Concrètement, on opère de la façon suivante :

• La première étape consiste après avoir déterminé les azimuts de mesure à recueillir les valeurs de la contrainte de cisaillement circonférentielle dans le bourrelet d'un côté au moins, lors de sollicitations variées du pneumatique choisies de façon à couvrir tout le domaine dans lequel l'évaluation de la ou des caractéristiques choisies sera permise en utilisation normale. Les sollicitations choisies doivent aussi mettre en oeuvre tous les couplages susceptibles d'être rencontrés lors d'une utilisation normale. L'ensemble de valeurs mesurées et de la ou des caractéristiques choisies associées (obtenus par un autre moyen de mesure) constitue la base d'apprentissage. Bien sûr, dans le cas où le carrossage est par la suite susceptible de varier, il est souhaitable de faire apparaître dans la base d'apprentissage des variations de l'angle de carrossage représentatives du domaine d'utilisation futur.

• La seconde étape consiste à réaliser l'apprentissage des poids du réseau (plus généralement, réaliser la détermination des coefficients d'une fonction d'interpolation) sur la base ainsi constituée. A l'issue de cette phase, on dispose des fonctions de transfert.

• Une troisième étape consiste à tester les fonctions de transfert en confrontant les estimations de la ou des caractéristiques choisies aux valeurs indiquées par un autre moyen de mesure.

Outre les réseaux de neurones, il est possible d'employer par exemple des fonctions polynomiales.

Dans le cas le plus réaliste où la pression de gonflage du pneumatique est susceptible de changer au cours du temps, il peut être nécessaire, en fonction de la précision souhaitée pour la mesure des composantes recherchées de prendre en compte les variations de pression.

Une première manière de procéder consiste à corriger les efforts estimés en sortie de fonction de transfert en fonction de la pression. Il est ainsi possible de réaliser une correction au premier ordre. En effet, soit une sollicitation appliquée sur le pneu dans le cas d'une fonction de transfert ne prenant pas en compte la pression. Si la pression est double de la pression de référence (à laquelle la fonction de transfert a été établie), la fonction de transfert verra environ deux fois moins de contraintes mesurées en entrée que pour la pression de référence. Elle évaluera donc des efforts deux fois plus faibles que les efforts réellement appliqués. Il convient de multiplier par deux les efforts estimés.

Toutefois, l'approche la plus précise consiste à introduire la pression comme paramètre dans les fonctions de transfert. Ceci implique :

♦ De réaliser l'apprentissage de la ou des fonctions de transfert sur une base d'apprentissage contenant des cas de sollicitation du pneumatique sous différentes

conditions de pression de gonflage couvrant le domaine de fonctionnement souhaité. ♦ De disposer d'une mesure ou d'une estimation de la pression de gonflage, par la mesure des contraintes elles-mêmes ou par un autre dispositif annexe.

De manière non limitative, on décrit ci-dessous deux voies pour connaître la pression. La première consiste à utiliser une mesure de pression donnée par un capteur de pression différent des capteurs de contrainte. La valeur de pression mesurée est alors fournie en plus des valeurs de contraintes aux azimuts à la ou aux fonctions de transfert. La figure 9a schématise l'architecture associée.

La seconde approche consiste à estimer la pression de gonflage à partir des mesures de contraintes. En effet, les signaux de contraintes présentent une composante structurelle et une composante pneumatique ce qui permet par leur analyse de capturer une information sur la pression de gonflage. Cette façon de faire nécessite de déterminer une fonction de transfert prenant en entrée les mesures de contrainte aux azimuts souhaités et donnant, sur le domaine de fonctionnement désiré, une estimation de la pression de gonflage. La même méthodologie que celle présentée précédemment est applicable :

♦ Constitution d'une base d'apprentissage mêlant variations d'efforts appliqués et de pression de gonflage.
♦ Détermination d'une fonction de transfert par apprentissage.

En pratique, si la précision d'une détermination de pression faite comme indiqué ci-dessus est jugée insuffisante pour une mise en oeuvre particulière de l'invention, il est possible de l'améliorer facilement. En effet, l'évolution de la pression dans un pneumatique est un phénomène lent par rapport à la rotation du pneumatique. On peut donc moyenner ou filtrer les estimations de pression de manière à ne conserver que les composantes basses fréquences. On obtient alors une bonne estimation de la pression de gonflage. La figure 7b schématise l'architecture qui résulte de cette approche. En plus de la connaissance des résultantes d'efforts recherchées, la méthode fournit alors une estimation de la pression de gonflage, sans capteur supplémentaire.

Naturellement, bien d'autres variables (en plus des mesures de la contrainte de cisaillement circonférentielle dans le bourrelet) peuvent être prises en compte selon le même principe pour améliorer l'efficacité de cette détermination. C'est le cas par exemple, de la température du pneumatique ou de la vitesse de rotation. En effet, suivant le type de capteur et la position de la mesure, il se peut que les signaux de contraintes obtenus dépendent légèrement de la vitesse de rotation du pneu. De manière à améliorer la précision des estimations, il peut alors être intéressant d'ajouter la vitesse de rotation comme paramètre en entrée de la fonction de transfert. La connaissance de la vitesse peut alors venir d'une mesure réalisée par un autre composant installé sur le véhicule ou par exemple être extraite des signaux de contraintes eux-mêmes.

De manière générale, le nombre de points de mesure peut être plus important que les configurations minimales présentées dans les exemples et permettre un résultat plus précis ou plus sûr du fait de la redondance des informations disponibles.

Une alternative pour augmenter la précision ou la robustesse de la méthode consiste à utiliser une mesure multi-dimensionnelle à la place d'une mesure mono-dimensionnelle. Par exemple et de manière non limitative, on peut utiliser à la fois une contrainte de cisaillement circonférentiel et une contrainte de cisaillement transversal, les deux grandeurs étant mesurées de manière préférée mais non limitative simultanément par le même capteur bi-dimensionnel au même endroit.

L'utilisation de ces deux contraintes permet de rendre une configuration dans laquelle un seul bourrelet est équipé de capteur(s) aussi robuste sur le plan de la performance et précise qu'une configuration dans laquelle les deux bourrelets sont équipés. En particulier, cette configuration permet de mesurer le carrossage alors qu'un unique bourrelet est équipé de capteur(s), ce qui n'est pas possible à l'aide d'un capteur monodimensionnel dans un seul bourrelet.

Dans ce cas, les entrées de la fonction de transfert sont constituées d'un panachage de mesures de l'une ou l'autre ou des différents types de contraintes à différents azimuts. Hormis cette différence, on utilise exactement la même démarche de détermination de la fonction de transfert. Cette approche peut s'avérer très intéressante car sur le plan de la réalisation du produit final, il peut être beaucoup plus simple et moins coûteux de n'équiper qu'un seul bourrelet même si le capteur est lui-même plus cher à fabriquer.

La mesure de la contrainte de cisaillement dans le bourrelet 1 d'un côté ou des deux côtés du pneumatique peut se faire de n'importe quelle manière, par un dispositif externe ou un dispositif interne au pneu. A titre d'exemple, on décrit ici pour réaliser la mesure de la contrainte de cisaillement circonférentiel dans le bourrelet 1 l'utilisation d'un ou de capteurs. 3 placés dans le pneu dans une zone 2 d'ancrage de la carcasse, et sont donc entraînés en rotation par le pneu.

Ce ou ces capteurs 3 intégrés au pneu et mesurant localement la contrainte de cisaillement circonférentielle du ou des bourrelets peuvent faire appel à n'importe quel principe physique de mesure. Il peut par exemple s'agir d'un corps d'épreuve 30 équipé de jauges de contraintes 31, par exemple résistives. Une déformation du corps d'épreuve se traduit par une modification de la résistance des jauges de contraintes 31 collées à sa surface (figures 10, 11 et 12). Les deux jauges 31 placées de part et d'autre du corps d'épreuve 30 fournissent alors par l'intermédiaire d'un pont de Wheatstone un signal fortement lié à la contrainte de cisaillement circonférentielle. S'il est actif, le capteur 3 peut être alimenté soit par le véhicule par téléalimentation soit par une batterie embarquée sur la roue ou dans le pneu ou par tout autre moyen. Tout est aussi possible en ce qui concerne la transmission de l'information vers le véhicule, par voie radio ou autre. Le capteur 3 en lui même doit pouvoir fournir une information en continu ou avec une fréquence de rafraîchissement suffisamment rapide par rapport à la période de rotation de la roue.

Une variante possible du capteur 3 consiste à utiliser des éléments piezo-électriques en lieu et place des jauges de contraintes 31. Les éléments piezo-électriques sont connectés à un amplificateur de charge qui permet de délivrer une tension proportionnelle à la flexion du corps d'épreuve. Cette variante présente l'intérêt de fournir non seulement un signal de mesure, mais aussi potentiellement d'alimenter en énergie électrique les circuits de traitement et/ou de transmission de l'information.

Pour mesurer les contraintes de cisaillement circonférentiel et de cisaillement transversal, on peut aussi utiliser un capteur du type décrit dans la demande de brevet EP02/014144 placé dans le bourrelet. Cette demande décrit un capteur de force de type clou comportant une tige rigide destinée à être sollicitée par la force à capter et une tête qui comporte un élément solidaire de la tige, destiné à être déformé ou contraint lorsque la tige est sollicitée. On dispose le capteur de type clou au même endroit que le capteur 3 montré à la figure 11, la tige étant orientée sensiblement radialement et vers les plus grands rayons, ou encore la tige étant orientée sensiblement perpendiculairement à l'orientation précédemment indiquée, et vers la cavité interne du pneu.

Cette approche utilisant un capteur 3 ou similaire intégré au pneu a l'avantage de permettre une connaissance de la contrainte de cisaillement dans le bourrelet d'un côté ou des deux côtés, à tous les azimuts du pneumatique puisqu'un capteur 3, entraîné par le pneu, explore l'ensemble des azimuts lors d'une rotation de la roue.

La méthode de reconstruction des composantes des efforts étant basée sur la mesure de la contrainte de cisaillement circonférentielle à certains azimuts, se pose le problème de la localisation du capteur 3 pour extraire les valeurs aux bons azimuts.

Le capteur 3 est interrogé ou délivre de lui même une mesure à une fréquence constante et connue. Il délivre donc un signal temporel de la variation de la contrainte de cisaillement circonférentielle locale. Un signal mesuré est présenté en figure 10. Sur ce signal temporel, On reconnaît aisément la signature d'un tour de roue que l'on a observée précédemment (figures 2a, 2b, 3a, 3b, 4a et 4b). Outre la signature de chaque tour de roue, ce signal est bruité. La première opération consiste à réduire ce bruit en appliquant un filtre passe bas dont la fréquence de coupure peut être liée à la vitesse de rotation de la roue.

Plusieurs cas de figure peuvent alors se présenter suivant les équipements disponibles :

- Si l'on dispose d'une mesure de la position angulaire de la roue, il est possible de connaître les instants auxquels le capteur 3 passe à l'azimut de mesure. La lecture des valeurs mesurées à ces instants fournit la valeur de la contrainte de cisaillement aux azimuts désirés. Cette mesure de la position angulaire de la roue peut, par exemple être obtenue par un comptage des transitions d'un capteur ABS de vitesse de rotation de la roue.

- Si aucun dispositif externe n'est disponible pour faciliter la localisation du capteur 3, on ne peut utiliser que le signal du capteur lui-même. L'invention propose d'utiliser le signal du capteur ou d'éventuels autres capteurs intégrés au pneu pour estimer la position angulaire de la roue.

Chaque passage du capteur 3 dans l'aire de contact a pour signature une variation rapide de la contrainte de cisaillement dans le bourrelet qui se traduit par une forte pente. En utilisant cette observation, il est possible de trouver les instants où le capteur 3 passe au centre de l'aire de contact. La méthode la plus simple pour réaliser cette opération consiste à dériver par rapport au temps le signal filtré de manière à connaître la pente à tout instant. Le signal dérivé obtenu présente un extremum lors du passage par le centre de l'aire de contact. Il est alors possible de réaliser un seuillage de ce signal dérivé et de rechercher les maxima parmi les valeurs supérieures à ce seuil (« algorithme 1 » - figure 14). Cette approche permet de ne pas détecter les maxima qui ne correspondent pas au passage dans l'aire de contact. Les instants où les extrema ont été localisés correspondent au instants de passage du capteur 3 au centre de l'aire de contact.

L'allure du signal évolue de manière sensible en fonction des efforts appliqués. En conditions réelles, le seuillage peut s'avérer compliqué, car le niveau du seuil doit être constamment adapté. De plus, dans certaines conditions, il arrive que le fait d'appliquer un seuil provoque la détection de plusieurs extrema par tour de roue. Cette situation se rencontre lorsqu'un effort Fy important est appliqué. Une approche possible mais non unique consiste à utiliser l'algorithme suivant :

♦ Utiliser par défaut l'algorithme précédemment expliqué appelé 'algorithme 1'.

♦ Quand une périodicité est détectée, utiliser la date du dernier passage dans l'aire de contact et une évaluation de la vitesse d'après les derniers passages pour prévoir la date du futur passage dans l'aire de contact $t_n$.

♦ Définir une fenêtre de signal à l'aide d'une incertitude autour de $t_n$ [$t_n$-d ;tn⁺d] avec d'inférieur à la demi-période du signal.

♦ Effectuer le seuillage dans cette fenêtre pour déterminer la vraie date $T_n$ qui correspond à l'approximation $t_n$.

♦ effectuer une nouvelle itération pour détecter le prochain tour. En cas d'erreur (période visiblement fausse, extrémum trouvé en limite de fenêtre, ...) reprendre 'algorithme 1' pour synchroniser à nouveau le processus.

A chaque détermination d'un nouveau passage dans l'aire de contact, la connaissance des instants des derniers passages (au moins 3 passages) permet d'estimer la vitesse de rotation de la roue et son accélération. Grâce à ces estimations, il est possible de reconstruire une évaluation de l'azimut auquel le capteur 3 se trouve en fonction du temps. Il devient alors possible d'extraire des mesures en fonction du temps les valeurs à certains azimuts.

Comme vu précédemment, l'estimation de la vitesse de rotation peut être utilisée en entrée de la fonction de transfert pour améliorer la précision de l'estimation des composantes d'efforts sur une grande plage de vitesses.

Plusieurs possibilités s'offrent alors pour la mise en oeuvre de la mesure. En effet, la détermination des composantes des efforts nécessite des mesures à plusieurs azimuts.

- Une première approche consiste à n'utiliser qu'un capteur 3 dans chaque bourrelet pour lequel on souhaite avoir des mesures. A chaque passage à une position requise, la valeur donnée par le capteur est prise en compte pour rafraîchir la mesure à l'azimut considéré. En faisant l'hypothèse que les composantes des efforts varient lentement par rapport à la vitesse de rotation de la roue, un seul capteur permet ainsi d'obtenir les mesures à tous les azimuts nécessaires à la reconstruction des efforts. La figure 15 présente ce type de fonctionnement avec un modèle (fonction de transfert) qui nécessite des mesures à trois azimuts (0°, 120° et 240°).

- Une seconde approche consiste à disposer plusieurs capteurs 3 sur la circonférence de façon à ce qu'au moins une fois par tour les capteurs se trouvent simultanément aux azimuts auxquels on désire réaliser une mesure. Il est ainsi possible d'obtenir une image de la déformation du pneu en différents azimuts à un instant donné ce qui ne nécessite plus que les efforts varient lentement par rapport à la rotation de la roue. Idéalement (bande passante maximale), le nombre de capteurs doit être au moins égal au nombre de grandeurs à estimer. Une mise en oeuvre de cette approche consiste à disposer les capteurs 3 de manière équi-répartie autour du pneu. Ainsi, dans le cas où l'on a placé N capteurs 3, la situation où les capteurs sont bien positionnés se produit au moins N fois par tour. La figure 16 présente ce type de fonctionnement avec trois capteurs qui tombent trois fois par tour sur les azimuts où la mesure doit être réalisée (0°, 120° et 240°).

- Enfin, il est possible de mixer les approches précédentes.

L'augmentation du nombre de capteurs permet en particulier :

- d'augmenter la fréquence de rafraîchissement de l'estimation des efforts, donc la bande passante du système

- d'augmenter la robustesse vis à vis des variations rapides des composantes des efforts appliqués dans l'aire de contact

Notons que plusieurs modèles peuvent être déterminés qui prennent en entrée les mesures à des azimuts différents. Même avec un unique capteur, il est ainsi possible d'obtenir plusieurs estimations à chaque tour de roue.

La figure 17 donne un exemple dans lequel trois capteurs sont utilisés. Deux fonctions de transfert sont déterminées. La première utilise des mesures à 0°, 120° et 240°, la seconde à 60°, 180° et 300°. Lorsque les capteurs tombent sur les positions de mesures désirées, la fonction de transfert peut être appliquée. En gérant convenablement les capteurs, il est même possible dans ce type de disposition de réaliser une estimation des efforts 6 fois par tour de roue. Ces estimations par plusieurs modèles peuvent être moyennées ou confrontées pour augmenter la précision et diminuer le bruit dans l'estimation des efforts.

**Revendications**

1. Méthode de détermination d'au moins une des caractéristiques choisies parmi les trois composantes d'une résultante d'efforts exercés par la chaussée sur l'aire de contact d'un pneumatique, le couple d'auto-alignement généré par le pneumatique, le carrossage et la pression, dans laquelle on équipe au moins un bourrelet du pneumatique d'au moins un capteur et on déduit la caractéristique des mesures du capteur, **caractérisée en ce que** ladite caractéristique est déduite d'au moins une mesure des contraintes en au moins trois points fixes dans l'espace, dont les coordonnées en azimuts ont leur origine définie par rapport au centre de l'aire de contact du pneu et de la chaussée.

2. Méthode de détermination selon la revendication 1, lesdits trois points fixes étant tels que :

   • un des points corresponde à l'azimut du centre de l'aire de contact ou l'azimut du point opposé à l'aire de contact ;
   • les deux autres points soient symétriques par rapport à un plan vertical passant par le centre de l'aire de contact.

3. Méthode selon la revendication 1, **caractérisée en ce que** l'on estime la mesure des contraintes dans un composant de caoutchouc dont le module de Young est supérieur à 5 Mpa à 10% d'allongement.

4. Méthode selon la revendication 2 dans laquelle, les azimuts de mesure étant choisis de façon symétrique par rapport à l'azimut du centre de l'aire de contact ($180°+\alpha$ et $180°-\alpha°$), avec $\alpha$ différent de 0° et 180°, $V_1^1$ et $V_2^1$ étant les valeurs mesurées à ces azimuts sur le premier bourrelet, et $V_1^2$ et $V_2^2$ les valeurs mesurées à ces azimuts sur le second bourrelet, $f_x(a_1V_1^1+a_2V_2^1+b_1V_1^2+b_2V_2^2)$ où $a_1$, $a_2$, $b_1$ et $b_2$ sont des coefficients réels positifs et $f_x$ une fonction continue monotone est une estimation de la composante Fx.

5. Méthode selon la revendication 2 dans laquelle, les azimuts de mesure étant choisis de façon symétrique par rapport à l'azimut du centre de l'aire de contact ($180°+\alpha$ et $180°-\alpha°$), avec $\alpha$ différent de 0° et 180°, $V_1^1$ et $V_2^1$ étant les valeurs mesurées à ces azimuts sur le premier bourrelet, et $V_1^2$ et $V_2^2$ les valeurs mesurées à ces azimuts sur le second bourrelet, $f_z(c_1 V_1^1-c_2V_2^1+d_1V_1^2-d_2V_2^2)$ où $c_1$, $c_2$, $d_1$ et $d_2$ sont des coefficients réels positifs et $f_z$ une fonction continue monotone, est une estimation de la composante Fz.

6. Méthode selon la revendication 2 dans laquelle, les azimuts de mesure étant choisis de façon symétrique par rapport à l'azimut du centre de l'aire de contact ($180°+\alpha$ et $180°-\alpha°$), avec $\alpha$ différent de 0° et 180°, $V_1^1$ et $V_2^1$ étant les valeurs mesurées à ces azimuts sur le premier bourrelet, et $V_1^2$ et $V_2^2$ les valeurs mesurées à ces azimuts sur le second bourrelet, $f_n(e_1V_1^1+e_2V_2^1-f_1V_1^2-f_2V_2^2)$ où $e_1$, $e_2$, $f_1$ et $f_2$ sont des coefficients réels positifs et $f_n$ une fonction continue monotone est une estimation du couple d'auto-alignement N.

7. Méthode selon la revendication 2 dans laquelle, les azimuts de mesure étant choisis de façon symétrique par rapport à l'azimut du centre de l'aire de contact ($180°+\alpha$ et $180°-\alpha°$), avec $\alpha$ différent de 0° et 180°, $V_1^1$ et $V_2^1$ étant les valeurs mesurées à ces azimuts sur le premier bourrelet, et $V_1^2$ et $V_2^2$ les valeurs mesurées à ces azimuts sur le second bourrelet, $f_y(g_1V_1^1-g_2V_2^1-h_1V_1^2-h_2V_2^2)$ où $g_1$, $g_2$, $h_1$ et $h_2$ sont des coefficients réels positifs et $f_y$ une fonction continue monotone est une estimation de la composante Fy.

8. Méthode selon la revendication 2 dans laquelle, les azimuts de mesure étant choisis de façon symétrique par rapport à l'azimut du centre de l'aire de contact ($180°+\alpha$ et $180°-\alpha°$), avec $\alpha$ différent de 0° et 180°, et $V_1$ et $V_2$ étant les valeurs mesurées en ces autres azimuts, $f_z(r_2V_2-r_1V_1)$ où $r_1$ et $r_2$ sont des coefficients réels positifs et $f_z$ une fonction continue monotone est une estimation de Fz.

9. Méthode selon la revendication 2 dans laquelle, un des azimuts correspondant au milieu de l'aire de contact (azimut 180°) et $V_c$ la valeur mesurée à cet azimut, les autres azimuts de mesure étant choisis de façon symétrique par rapport à l'azimut du centre de l'aire de contact ($180°+\alpha$ et $180°-\alpha°$), avec $\alpha$ différent de 0° et 180°, et $V_1$ et $V_2$ étant les valeurs mesurées en ces autres azimuts, $f_y(s_cV_c-(s_1V_1+s_2V_2))$ où $s_1$, $s_2$ et $s_c$ sont des coefficients réels positifs et $f_y$ une fonction continue monotone est une estimation de Fy.

10. Méthode selon la revendication 2 dans laquelle, un des azimuts correspondant au milieu de l'aire de contact (azimut 180°) et $V_c$ la valeur mesurée à cet azimut, les autres azimuts de mesure étant choisis de façon symétrique par rapport à l'azimut du centre de l'aire de contact ($180°+\alpha$ et $180°-\alpha°$), avec $\alpha$ différent de 0° et 180°, et $V_1$ et $V_2$ étant les valeurs mesurées en ces autres azimuts, $f_x(u_cV_c+u_1V_1+u_2V_2)$ où $u_1$, $u_2$ et $u_c$ sont des coefficients réels positifs et $f_x$ une fonction continue monotone est une estimation de Fx.

11. Méthode selon la revendication 1 dans laquelle on recherche une différence de contraintes s'exerçant dans chacun des bourrelets à partir des mesures de contraintes dans les bourrelets, pour estimer l'angle de carrossage.

12. Méthode selon la revendication 1 dans laquelle, à partir des mesures de contraintes dans les bourrelets, on recherche une contribution due au fonctionnement pneumatique distincte d'une contribution due au fonctionnement structurel pour estimer la pression.

13. Méthode de détermination d'au moins une des caractéristiques choisies parmi les trois composantes d'une résultante d'efforts exercés par la chaussée sur l'aire de contact d'un pneumatique, le couple d'auto-alignement généré par le pneu, le carrossage et la pression, au moins un bourrelet du pneumatique étant équipé d'au moins un capteur, **caractérisé en ce qu'**il comprend les étapes suivantes :

• déterminer les azimuts de mesure d'au moins trois points fixes dans un espace, dont les coordonnées en azimuts ont leur origine définie par rapport au centre de l'aire de contact du pneu et de la chaussée, et recueillir les valeurs de la contrainte de cisaillement circonférentielle dans le bourrelet d'un côté au moins, lors de sollicitations variées du pneumatique choisies de façon à couvrir tout le domaine dans lequel l'évaluation de la ou des caractéristiques choisies sera permise en utilisation normale, les sollicitations choisies provoquant tous les couplages susceptibles d'être rencontrés lors d'une utilisation normale,
• relever des valeurs mesurées et de la ou des caractéristiques choisies associées (obtenus par un autre moyen de mesure) pour constituer une base d'apprentissage,
• déterminer les coefficients d'une fonction d'interpolation permettant d'établir un lien entre les grandeurs mesurées et les valeurs de la ou des caractéristiques choisies à partir de la base d'apprentissage,
• tester les fonctions de transfert en confrontant les estimations de la ou des caractéristiques choisies aux valeurs indiquées par un autre moyen de mesure.

14. Méthode de détermination selon la revendication 13, dans laquelle la fonction d'interpolation est un réseau à une couche de neurones cachés et une couche de neurones de sortie..

15. Méthode de détermination selon la revendication 13 ou 14, utilisée pour déterminer les coefficients de l'une des méthodes selon les revendications 4 à 10.

**Claims**

1. A method of determining at least one characteristic of a tire selected from the three components of a resultant of forces which are exerted by the road on the contact area of a tire, the self-alignment torque generated by the tire, the camber and the pressure, wherein at least one of the beads of the tire is equipped with a sensor and wherein the characteristic is derived from the measurements of the sensor, **characterised in that** said characteristic is derived from at least one measurement of stresses in at least three fixed points in space whose coordinates in azimuths have their origin defined in regard of the centre of the contact area of the tire and the road.

2. The method according to claim 1, wherein the three fixed points being such that:

• one of the points corresponds to the azimuth of the centre of the contact area or to the azimuth of the point opposite to the contact area;
• the other two points are symmetrical with respect to a vertical plane passing through the centre of the contact area.

3. The method according to Claim 1, wherein the measurement of the stresses is performed in a rubber component whose Young's modulus is more than 5 MPa at 10% strain.

4. The method according to Claim 1, in which, the measurement azimuths being selected symmetrically with respect to the azimuth of the centre of the contact area ($180°+\alpha$ and $180°-\alpha°$), with $\alpha$ not equal to 0° or 180°, $V_1^1$ and $V_2^1$ being values measured at these azimuths on a first bead and $V_1^2$ and $V_2^2$ being the values measured at these azimuths on a second bead, an estimate of the component Fx is provided by $f_x(a_1V_1^1+a_2V_2^1+b_1V_1^2+b_2V_2^2)$, where $a_1$, $a_2$, $b_1$ and $b_2$ are positive real coefficients and $f_x$ is a monotonic continuous function.

5. The method according to Claim 2, in which, the measurement azimuths being selected symmetrically with respect to the azimuth of the centre of the contact area ($180°+\alpha$, and $180°-\alpha°$), with $\alpha$ not equal to 0° or 180°, $V_1^1$ and $V_2^1$ being values measured at these azimuths on the first bead and $V_1^2$ and $V_2^2$ being values measured at these azimuths on the second bead, an estimate of the component Fz is provided by $f_z(c_1V_1^1-c_2V_2^1+d_1V_1^2-d_2V_2^2)$, where $c_1$, $c_2$, $d_1$ and $d_2$ are positive real coefficients and $f_z$ is a monotonic continuous function.

6. The method according to Claim 2, in which, the measurement azimuths being selected symmetrically with respect to the azimuth of the centre of the contact area ($180°+\alpha$ and $180°-\alpha°$), with $\alpha$ not equal to 0° or 180°, $V_1^1$ and $V_2^1$ being values measured at these azimuths on the first bead and $V_1^2$ and $V_2^2$ being values measured at these azimuths on the second bead, an estimate of the self-alignment torque N is provided by $f_n(e_1V_1^1+e_2V_2^1-f_1V_1^2-f_2V_2^2)$, where $e_1$, $e_2$, $f_1$ and $f_2$ are positive real coefficients and $f_n$ is a monotonic continuous function.

7. The method according to Claim 2, in which, the measurement azimuths being selected symmetrically with respect to the azimuth of the centre of the contact area ($180°+\alpha$ and $180°-\alpha°$), with $\alpha$ not equal to 0° or 180°, $V_1^1$ and $V_2^1$ being values measured

at these azimuths on the first bead and $V_1^2$ and $V_2^2$ being values measured at these azimuths on the second bead, an estimate of the component Fy is provided by $f_y(g_1V_1^1-g_2V_2^1-h_1V_1^2+h_2V_2^2)$, where $g_1$, $g_2$, $h_1$ and $h_2$ are positive real coefficients and $f_y$ is a monotonic continuous function.

8. The method according to Claim 2, in which, the measurement azimuths being selected symmetrically with respect to the azimuth of the centre of the contact area (180°+$\alpha$ and 180°-$\alpha$°), with $\alpha$ not equal to 0° or 180°, and $V_1$ and $V_2$ being values measured at these other azimuths, an estimate of Fz is provided by $f_z(r_2V_2-r_1V_1)$, where $r_1$ and $r_2$ are positive real coefficients and $f_z$ is a monotonic continuous function.

9. The method according to Claim 2, in which, one of the azimuths corresponding to the middle of the contact area (azimuth 180°) and $V_c$ being a value measured at this azimuth, the other measurement azimuths being selected symmetrically with respect to the azimuth of the centre of the contact area (180°+$\alpha$ and 180°-$\alpha$°), with $\alpha$ not equal to 0° or 180°, and $V_1$ and $V_2$ being values measured at these other azimuths, an estimate of Fy is provided by $f_y$ $(s_cV_c-(s_1V_1+s_2V_2))$, where $s_1$, $s_2$ and $s_c$ are positive real coefficients and $f_y$ is a monotonic continuous function.

10. The method according to Claim 2, in which, one of the azimuths corresponding to the middle of the contact area (azimuth 180°) and $V_c$ being a value measured at this azimuth, the other measurement azimuths being selected symmetrically with respect to the azimuth of the centre of the contact area (180°+$\alpha$ and 180°-$\alpha$°), with $\alpha$ not equal to 0° or 180°, and $V_1$ and $V_2$ being values measured at these other azimuths, an estimate of Fx is provided by $f_x$ $(u_cV_c+u_1V_1+u_2V_2)$, where $u_1$, $u_2$ and $u_c$ are positive real coefficients and $f_x$ is a monotonic continuous function.

11. The method according to Claim 1, wherein to estimate camber angle, the method comprises determining a difference in stresses being exerted in each of the beads on the basis of the measurements of stresses in the beads.

12. The method according to Claim 1, wherein, to estimate pressure a contribution due to the pneumatic behaviour separate from a contribution due to structural behaviour is determined on the basis of the measurements of stresses in the beads.

13. A method of determining at least one characteristic of a tire selected from: the x component, y component and z component of a resultant of forces which are exerted by the road on the contact area of the tire, the self-alignment torque generated by the tire, the camber, and the pressure, at least one bead of the tire being equipped with at least one sensor, **characterized in that** the method comprises the steps of:

> determining measurement azimuths of at least three fixed points in space, whose coordinates in azimuths have their origin defined with respect of the centre of the contact area of the tire and of the road, and collecting values for circumferential shear stress in a bead on at least one side of the tire while soliciting varied stresses on the tire, which stresses are selected to cover the full range in which evaluation of the at least one selected characteristic will be permitted in normal use, the solicited stresses selected to create all the couplings expected during normal use,
> reading measured values for circumferential shear stress in the bead and reading values of the at least one characteristic associated with the measured values to form a training base, the values of the at least one characteristic being obtained through measurement means different from the means for the measured values,
> determining coefficients of a transfer function for establishing a link between the measured values and the values of the at least one selected characteristic on the basis of the training base, and,
> testing the transfer functions by making and comparing estimates of the at least one selected characteristic with the values obtained by different measurement means.

14. The method of determination according to Claim 13, in which the transfer function is a network having one layer of hidden neurons and one layer of output neurons.

15. The method of determination according to Claim 13 or 14, utilised to determine the coefficients of one of the methods according to claims 4 to 10.

**Patentansprüche**

1. Verfahren zum Bestimmen wenigstens einer der Charakteristiken, die unter den drei Komponenten einer Resultierenden von Kräften, die von der Fahrbahn auf die Lauffläche eines Luftreifens ausgeübt werden, dem durch den Luftreifen erzeugten Selbstausrichtmoment, dem Radsturz und dem Druck gewählt werden, wobei wenigstens ein Wulst des Luftreifens mit wenigstens einem Sensor ausgerüstet wird und die Charakteristik aus den Messungen des Sensors abgeleitet wird, **dadurch gekennzeichnet, dass** die Charakteristik aus wenigstens einer Messung der Beanspruchungen an wenigstens drei festen Punkten im Raum abgeleitet wird, wobei der Ursprung von deren Azimutwinkel-Koordinaten in Bezug auf das Zentrum der Lauffläche des Reifens und der Fahrbahn definiert ist.

2. Bestimmungsverfahren nach Anspruch 1, wobei die drei festen Punkte folgende Punkte sind:

    - einer der Punkte entspricht dem Azimutwinkel des Zentrums der Lauffläche oder dem Azimutwinkel des der Lauffläche gegenüberliegenden Punkts;
    - die beiden anderen Punkte sind in Bezug auf eine vertikale Ebene, die durch das Zentrum der Lauffläche verläuft, symmetrisch.

3. Verfahren nach Anspruch 1, **dadurch gekennzeichnet, dass** die Messung der Beanspruchungen in einer Kautschukkomponente, deren Young-Modul größer als 5 MPa bei einer Dehnung von 10 % ist, geschätzt wird.

4. Verfahren nach Anspruch 2, wobei dann, wenn die Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, wenn $V_1^1$ und $V_2^1$ die bei diesem Azimutwinkel bei dem ersten Wulst gemessenen Werte sind und $V_1^2$ und $V_2^2$ die bei diesem Azimutwinkel bei dem zweiten Wulst gemessenen Werte sind, $f_x(a_1V_1^1 + a_2V_2^1 + b_1V_1^2 + b_2V_2^2)$, wobei $a_1$, $a_2$, $b_1$ und $b_2$ positive reelle Koeffizienten sind und $f_x$ eine monotone stetige Funktion ist, eine Schätzung der Komponente Fx ist.

5. Verfahren nach Anspruch 2, wobei dann, wenn die Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, wenn $V_1^1$ und $V_2^1$ die bei diesem Azimutwinkel bei dem ersten Wulst gemessenen Werte sind und wenn $V_1^2$ und $v_2^2$ die bei diesem Azimutwinkel bei dem zweiten Wulst gemessenen Werte sind, $f_z(c_1V_1^1 - c_2V_2^1 + d_1V_1^2 - d_2V_2^2)$, wobei $c_1$, $c_2$, $d_1$ und $d_2$ positive reelle Koeffizienten sind und $f_z$ eine monotone stetige Funktion ist, eine Schätzung der Komponente Fz ist.

6. Verfahren nach Anspruch 2, wobei dann, wenn die Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, wenn $V_1^1$ und $V_2^1$ die bei den Azimutwinkeln bei dem ersten Wulst gemessenen Werte sind und wenn $V_1^2$ und $V_2^2$ die bei diesen Azimutwinkeln bei dem zweiten Wulst gemessenen Werte sind, $f_n(e_1V_1^1 + e_2V_2^1 - f_1V_1^2 - f_2V_2^2)$, wobei $e_1$, $e_2$, $f_1$ und $f_2$ positive reelle Koeffizienten sind und $f_n$ eine monotone stetige Funktion ist, eine Schätzung des Selbstausrichtmoments N ist.

7. Verfahren nach Anspruch 2, wobei dann, wenn die Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, wenn $V_1^1$ und $V_2^1$ die bei diesen Azimutwinkeln bei dem ersten Wulst gemessenen Werte sind und wenn $V_2^1$ und $v_2^2$ die bei diesen Azimutwinkel bei dem zweiten Wulst gemessenen Werte sind, $f_y(g_1v_1^1 - g_2V_2^1 - h_1V_1^2 + h_2V_2^2)$, wobei $g_1$, $g_2$, $h_1$ und $h_2$ positive reelle Koeffizienten sind und $f_y$ eine monotone stetige Funktion ist, eine Schätzung der Komponente Fy ist.

8. Verfahren nach Anspruch 2, wobei dann, wenn die Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, wenn $V_1$ und $V_2$ die bei diesen anderen Azimutwinkeln gemessenen Werte sind, $f_z(r_2V_2 - r_1V_1)$, wobei $r_1$ und $r_2$ positive reelle Koeffizienten sind und $f_z$ eine monotone stetige Funktion ist, eine Schätzung von Fz ist.

9. Verfahren nach Anspruch 2, wobei dann, wenn einer der Azimutwinkel der Mitte der Lauffläche entspricht (Azimutwinkel $180°$), wenn $V_c$ der gemessene Wert bei diesem Azimutwinkel ist, wenn die anderen Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, und wenn $V_1$ und $V_2$ die bei diesen anderen Azimutwinkeln gemessenen Werte sind, $f_y(s_cV_c - (s_1V_1 + s_2V_2))$, wobei $s_1$, $s_2$ und $s_c$ positive reelle Koeffizienten sind und $f_y$ eine monotone stetige Funktion ist, eine Schätzung von Fy ist.

10. Verfahren nach Anspruch 2, wobei dann, wenn einer der Azimutwinkel der Mitte der Lauffläche entspricht (Azimutwinkel $180°$), wenn $V_c$ der gemessene Wert bei diesem Azimutwinkel ist, wenn die anderen Azimutwinkel der Messungen symmetrisch in Bezug auf den Azimutwinkel des Zentrums der Lauffläche gewählt werden ($180° + \alpha$ und $180° - \alpha°$), mit $\alpha$ verschieden von $0°$ und $180°$, und wenn $V_1$ und $V_2$ die bei diesen anderen Azimutwinkeln gemessenen Werte sind, $f_x(u_cV_c + u_1V_1 + u_2V_2^2)$, wobei $u_1$, $u_2$ und $u_c$ positive reelle Koeffizienten sind und $f_x$ eine monotone stetige Funktion ist, eine Schätzung von Fx ist.

11. Verfahren nach Anspruch 1, wobei eine Differenz von Beanspruchungen, die in jedem der Wulste ausgeübt werden, anhand der Messungen von Beanspruchungen in den Wulsten gesucht wird, um den Radsturwinkel zu schätzen.

**12.** Verfahren nach Anspruch 1, wobei anhand der Messungen der Beanspruchungen in den Wulsten ein durch die Funktion des Luftreifens bedingter Beitrag, der von einem durch die strukturelle Funktion bedingten Beitrag verschieden ist, für die Schätzung des Drucks gesucht wird.

**13.** Verfahren zum Bestimmen wenigstens einer der Charakteristiken, die unter den drei Komponenten einer Resultierenden von Kräften, die von der Fahrbahn auf die Lauffläche eines Luftreifens ausgeübt werden, dem Selbstausrichtmoment, das von dem Reifen erzeugt wird, dem Radsturz und dem Druck gewählt werden, wobei wenigstens ein Wulst des Luftreifens mit wenigstens einem Sensor ausgerüstet ist, **dadurch gekennzeichnet, dass** es die folgenden Schritte umfasst:

- Bestimmen der Azimutwinkel der Messungen an wenigstens drei festen Punkten im Raum, wobei der Ursprung von deren Azimutwinkel-Koordinaten in Bezug auf das Zentrum der Lauffläche des Reifens und der Fahrbahn definiert ist, und Sammeln der Werte der Umfangsscherungsbeanspruchung im Wulst auf wenigstens einer Seite, wenn unterschiedliche Belastungen des Luftreifens auftreten, die so gewählt sind, dass sie den gesamten Bereich abdecken, in dem die Bewertung der einen oder der mehreren gewählten Charakteristiken bei normaler Verwendung erlaubt sind, wobei die gewählten Lasten sämtliche Kopplungen hervorrufen, die bei normaler Verwendung angetroffen werden können,
- Erfassen der gemessenen Werte der einen oder der mehreren zugeordneten gewählten Charakteristiken (die durch ein anderes Messmittel erhalten werden), um eine Lernbasis zu bilden,
- Bestimmen der Koeffizienten einer Interpolationsfunktion, die ermöglicht, eine Verbindung zwischen den gemessenen Größen und den Werten der einen oder der mehreren gewählten Charakteristiken anhand der Lernbasis aufzubauen,
- Testen der Übertragungsfunktionen, indem die Schätzungen der einen oder der mehreren gewählten Charakteristiken Werten gegenübergestellt werden, die durch ein anderes Messmittel angegeben werden.

**14.** Bestimmungsverfahren nach Anspruch 13, wobei die Interpolationsfunktion ein Netz mit einer Schicht aus verborgenen Neuronen und einer Schicht von Ausgangsneuronen ist.

**15.** Bestimmungsverfahren nach Anspruch 13 oder 14, das verwendet wird, um die Koeffizienten eines der Verfahren nach den Ansprüchen 4 bis 10 zu bestimmen.

Figure 1

## Contraintes de cisaillement au point A

Contraintes
(daN/mm²)

**Figure 2a**

## Contraintes de cisaillement au point B

Contraintes
(daN/mm²)

**Figure 2b**

Contraintes de cisaillement au point A

Contraintes
(daN/mm²)

**Figure 3a**

Contraintes de cisaillement au point B

Contraintes
(daN/mm²)

**Figure 3b**

Contraintes de cisaillement au point A

Contraintes
(daN/mm²)

**Figure 4a**

Contraintes de cisaillement au point B

Contraintes
(daN/mm²)

**Figure 4b**

Figure 5

Contraintes de cisaillement au point A

Contraintes
(daN/mm²)

Figure 6a

Contraintes de cisaillement au point B

Contraintes
(daN/mm²)

Figure 6b

**Figure 7**

```
┌──────────────┐      ┌ ─ ─ ─ ─ ─ ─ ─┐      ┌──────────────┐           ┌────┐
│   Mesures    │ ───▶ ¦ Combinaisons ¦ ───▶ │   Réseau de  │      ┌──▶ │ Fx │
│  aux azimuts │      ¦  linéaires    ¦      │   neurones   │      │    └────┘
└──────────────┘      └ ─ ─ ─ ─ ─ ─ ─┘      └──────────────┘      │    ┌────┐
                                                                  ├──▶ │ Fy │
                                                                  │    └────┘
                                                                  │    ┌────┐
                                                                  ├──▶ │ Fz │
                                                                  │    └────┘
                                                                  │    ┌────┐
                                                                  ├──▶ │ N  │
                                                                  │    └────┘
                                                                  │    ┌────┐
                                                                  ├──▶ │ γ  │
                                                                  │    └────┘
                                                                  │    ┌────┐
                                                                  └──▶ │ P  │
                                                                       └────┘
```

```
┌──────────────┐      ┌ ─ ─ ─ ─ ─ ─ ─┐           ┌──────────────┐            ┌────┐
│   Mesures    │ ───▶ ¦ Combinaisons ¦ ──┐  ┌──▶ │   Réseau de  │ ───────▶   │ Fx │
│  aux azimuts │      ¦  linéaires    ¦   │  │    │   neurones   │            └────┘
└──────────────┘      └ ─ ─ ─ ─ ─ ─ ─┘   │  │    └──────────────┘
                                         │  │    ┌──────────────┐            ┌────┐
                                         │  ├──▶ │   Réseau de  │ ───────▶   │ Fy │
                                         │  │    │   neurones   │            └────┘
                                         │  │    └──────────────┘
                                         │  │    ┌──────────────┐            ┌────┐
                                         │  ├──▶ │   Réseau de  │ ───────▶   │ Fz │
                                         │  │    │   neurones   │            └────┘
                                         │  │    └──────────────┘
                                         │  │    ┌──────────────┐            ┌────┐
                                         │  ├──▶ │   Réseau de  │ ───────▶   │ N  │
                                         │  │    │   neurones   │            └────┘
                                         │  │    └──────────────┘
                                         │  │    ┌──────────────┐            ┌────┐
                                         │  ├──▶ │   Réseau de  │ ───────▶   │ γ  │
                                         │  │    │   neurones   │            └────┘
                                         │  │    └──────────────┘
                                         │  │    ┌──────────────┐            ┌────┐
                                         └──┴──▶ │   Réseau de  │ ───────▶   │ P  │
                                                 │   neurones   │            └────┘
                                                 └──────────────┘
```

**Figure 8**

Mesures aux azimuts

Mesure externe de la pression

Fonction de transfert

Fx

Fy

Fz

N

Figure 9a

Mesures aux azimuts

Fonction de transfert Pression

Pression estimée filtrée

Fonction de transfert

Fx

Fy

Fz

N

P

Figure 9b

Figure 10

Figure 11

**Figure 12**

Signal mesuré

Signal filtré

**Figure 13**

Principe du seuillage sur le signal dérivé

Dérivée de la contrainte de cisaillement

Temps

**Figure 14**

**Figure 15**

**Figure 16**

Figure 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1026490 A2
- EP 02014144 A